(19)

Europäisches
Patentamt
European
Patent Office
Office européen
des brevets

(11) **EP 2 101 257 A1**

(12) **EUROPEAN PATENT APPLICATION**

(43) Date of publication:
**16.09.2009 Bulletin 2009/38**

(51) Int Cl.:
**G06F 7/58** *(2006.01)* **H03M 13/27** *(2006.01)*
**G06F 7/76** *(2006.01)*

(21) Application number: **08004740.0**

(22) Date of filing: **13.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Panasonic Corporation**
**Kadoma-shi**
**Osaka 571-8501 (JP)**

(72) Inventor: **Petrov, Mihail**
**63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **Configurable pseudo-random sequence generator**

(57) The present invention relates to a method for generating pseudo-random sequences of integers and a corresponding apparatus. Specifically, it is the aim of the present invention to provide a pseudo-random sequence generator that can easily be configured to generate one of a plurality of different sequences, wherein each sequence includes every integer from a certain finite set exactly once and exhibits a high degree of randomness. To this end, the output of a linear congruential generator is passed through a combinational network that performs a one-to-one mapping of the state space in order to improve the degree of randomness. The present invention also relates to a method for interleaving/ deinterleaving a stream of data and a corresponding apparatus, based on such a pseudo-random sequence generator.

## Fig. 4C

EP 2 101 257 A1

**Description**

The present invention relates to a method for generating pseudo-random sequences of integers and a corresponding apparatus, and more specifically to a method and an apparatus for generating sequences of integers wherein each integer from a finite set occurs exactly once. The present invention also relates to a method for interleaving a stream of data and a corresponding apparatus, based on such pseudo-random sequences of integers.

BACKGROUND OF THE INVENTION

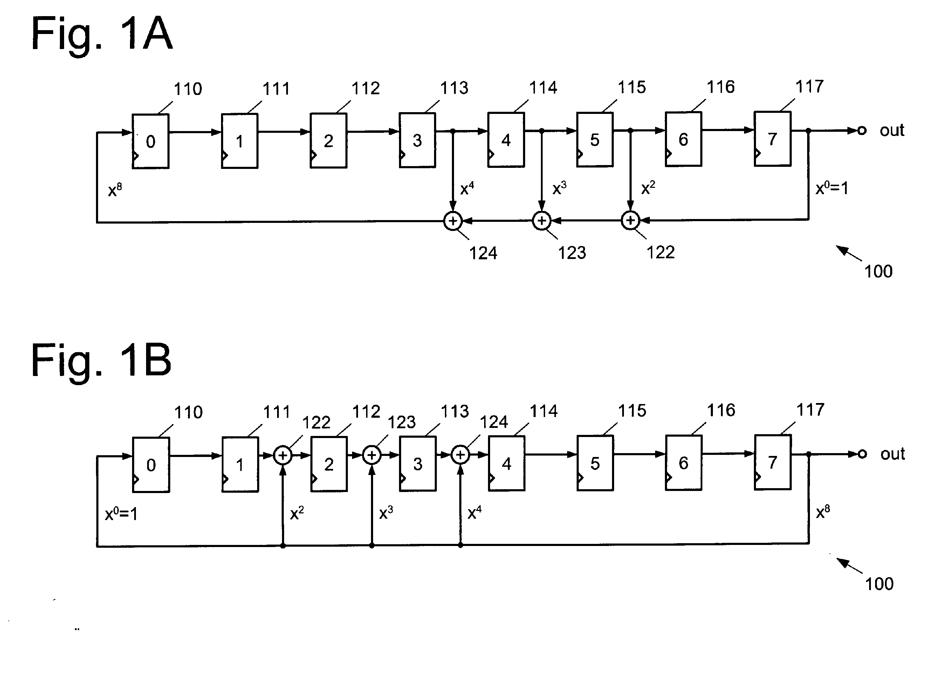

Various types of pseudo-random generators are known in the literature. Probably the best known is the linear-feedback shift register (LFSR). There are two configurations of linear-feedback shift registers known in the art, viz. the Fibonacci (or external) configuration, shown in Fig. 1A, and the Galois (or internal) configuration, shown in Fig. 1B. The memory elements (110-117) store bits, i.e. binary 0/1 values. The adders (122, 123, 124) are elementary 1-bit adders, which can be implemented with XOR gates. The LFSR (100) is thus a sequential state machine.
An LFSR is characterized by the length of the register N and by the positions of the adders, also referred to as taps. The positions of the taps can be expressed through a polynomial, indicated as $X^8+X^4+X^3+X^2+1$ in Figs. 1A and 1B, the latter being referred to as generator polynomial.
Starting from an initial state, the LFSR goes through a periodic sequence of states. If the generator polynomial is primitive (or irreducible) then the generated sequence has maximum length, going through all $2^N$-1 states. Note that state 0 is never reached. If the LFSR is initialized by mistake to state 0 it will always stay in that state. The order in which the $2^N$-1 states are reached depends on the actual generator polynomial.
An LFSR can therefore generate all the non-zero integers from 1 to $2^N$-1. The properties of the generated sequence depend on the generator polynomial. Whether a sequence is good or bad depends largely on the specific application in which these are used. In some applications, such as pseudo-random block interleavers, the degree of randomness achieved by the LFSR alone is not sufficient. In order to improve the degree of randomness, an additional wires permutation may be used at the output of the LFSR.
Figure 2 shows an example of a conventional 10-bit LFSR (200) with ten memory elements (210-219), an 1-bit adder (223) and an additional wires permutation (230), as it is used in the European DVB-T digital TV standard in the 2K FFT mode. The wires permutation (230) affects the order in which the states are generated, thereby changing the generated sequence.
Figure 3A is a schematic diagram of another form of pseudo-random sequence generator known in the art, namely the linear congruential generator (LCG). Such a generator is defined by the recurrence relation:

$$X[n+1] = (A*X[n]+C) \bmod M$$

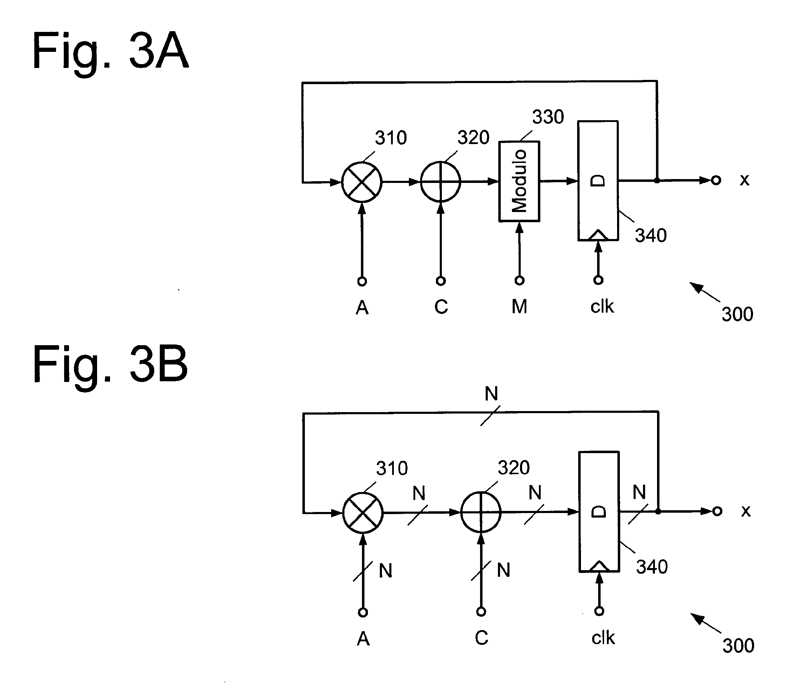

where M is the modulo value, A is an integer multiplier in the range [1; M-1], and C is an integer increment in the range [1; M-1]. A conventional LCG may thus be formed by arranging a multiplier 310, an adder 320, a modulo unit 330, and a latch 340 for storing the X[n] state, as shown in Fig. 3A. In case that the modulo value M is a power of 2, the modulo operation may be performed by simply truncating the excess most significant bits (MSBs). The corresponding block diagram of a N-bit LCG is shown in Fig. 3B for $M=2^N$.
The pseudo-random sequence generated by a LCG has the maximum period M if and only if:

(1) C and M are relatively prime.

(2) A-1 is divisible by all prime factors of M.

(3) A-1 is a multiple of 4 if M is a multiple of 4.

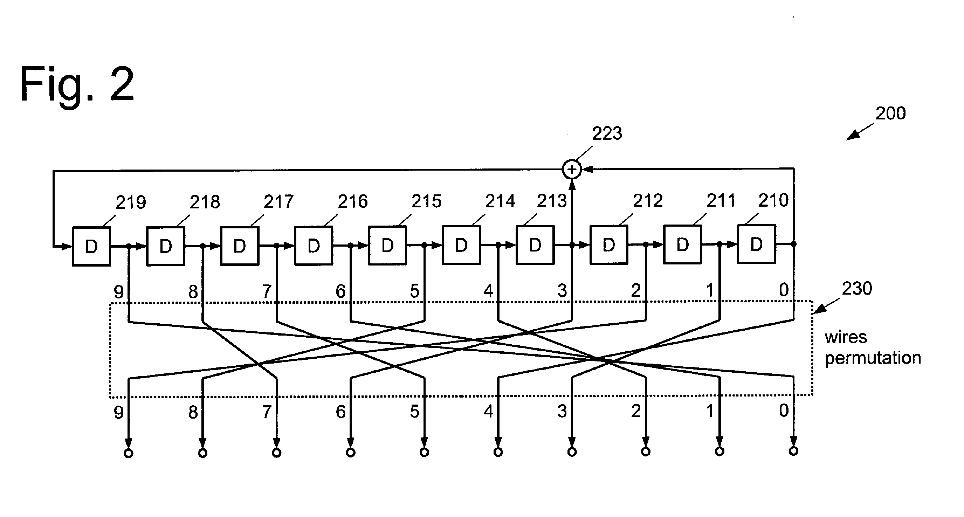

For a given M, the generated sequence depends on both A and C. Changing the initial state does not change the sequence, adding only a constant offset.
In some applications, the same generator must be able to generate different pseudo-random sequences. There are two ways to achieve that when using an LFSR: by changing either the generator polynomial or the wires permutation.
Changing the generator polynomial involves additional complexity. Each 1-bit register must have its own 1-bit adder. Depending on which terms of the polynomial are non-zero, the adder is connected or not. For the LFSR in Fig. 2 the complexity would increase from a XOR gate to 9 XOR and 9 AND gates. Note that register 0 is always connected, so no gates are needed for it.
Apart from the increase in complexity, which is not significant, changing the generator polynomial for each sequence has the further disadvantage that the various polynomials need to be stored in a look-up table. If many different sequences are needed, the look-up table can become very large. Besides, it may be possible that not so many primitive polynomials exists for a given degree, i.e. LFSR size, which sets an absolute limit on the number of different sequences that can be generated by changing the generator polynomial.
Changing the wires permutation offers more possibilities. However, because of the huge number of possible permutations for N bits, i.e. N!, it is difficult to find a consistent method for selecting the best one. The resulting shuffling network would be very irregular and could easily grow very large if many different sequences are needed.

An LCG, on the other hand, offers significantly more flexibility because it has two parameters that can be changed with very little effort in hardware: multiplier A and increment C. Because of the increased flexibility, the LCG is more attractive when multiple different sequences need to be generated. However, the LCG is infamous for several severe defects that impair the degree of randomness of the numbers generated, rendering the use of LCGs for certain application impracticable.

There is thus a need in the art for an improved pseudo-random sequence generator that overcomes the above problems.

SUMMARY OF THE INVENTION

The aim of the present invention is to provide a pseudo-random sequence generator that can easily be configured to generate one of a plurality of different sequences, wherein each sequence includes every integer from a certain finite set exactly once and exhibits a high degree of randomness.

This is achieved by the features as set forth in the independent claims.

Preferred embodiments are the subject matter of dependent claims.

It is the particular approach of the present invention to pass the output of a linear congruential generator through a combinational network that performs a one-to-one mapping of the state space in order to improve the degree of randomness of the generated sequence.

According to a first aspect of the present invention, a pseudo-random sequence generator for generating a pseudo-random sequence of integers, wherein each integer within a predetermined range occurs exactly once within the pseudo-random sequence, is provided. The pseudo-random sequence generator comprises a linear congruential generator for generating a sequence of integers and a combinational network for applying a predetermined transformation to each integer of the sequence of integers, wherein the predetermined transformation maps each integer of the sequence of integers to an integer within the predetermined range in a one-to-one fashion.

According to a further aspect of the present invention, an interleaver/deinterleaver for interleaving and deinterleaving a block of data words is provided. The apparatus comprises a pseudo-random sequence generator according to the first aspect of the present invention, a memory unit, a write control means for writing the block of data words to the memory unit in a first order; and a read control means reading the block of data words from the memory unit in a second order, wherein a relation between the first order and the second order is given by a permutation indicated by a pseudo-random sequence of integers generated by the pseudo-random sequence generator.

According to a further aspect of the present invention, a method for generating a pseudo-random sequence of integers, wherein each integer within a predetermined range occurs exactly once within the pseudo-random sequence, is provided. Said method comprises the steps of generating a sequence of integers and applying a predetermined transformation to each integer of the sequence of integers, wherein the predetermined transformation maps each integer of the sequence of integers to an integer within the predetermined range in a one-to-one fashion.

According to a further aspect of the present invention, a method for interleaving and deinterleaving a block of data words is provided. The method comprises the steps of writing the block of data words to a memory in a first order; and reading the block of data words from the memory in a second order, wherein a relation between the first order and the second order is given by a permutation indicated by a pseudo-random sequence of integers generated by a method according to one of the above aspects of the present invention.

Preferably, the sequence of integers is generated in accordance with at least one control parameter. More preferably, the at least one control parameter comprises at least one of a predetermined factor, a predetermined increment, and a predetermined divisor; and wherein each integer of the sequence of integers is computed recursively from a preceding integer by multiplying the preceding integer with the predetermined factor, adding the predetermined increment and computing the remainder of a division by the predetermined divisor. In this manner, a plurality of different sequences can readily be generated by changing the control parameter accordingly.

Preferably, the predetermined increment and the predetermined divisor are relatively prime, the predetermined factor minus 1 is divisible by all prime factors of the predetermined divisor, and the predetermined factor minus 1 is a multiple of 4 if the predetermined divisor is a multiple of 4. In this case, the linear congruential generator produces a maximum-length sequence of integers.

Preferably, the predetermined divisor is a power of two, so that the modulo operation can easily be implemented in hard- or software by truncating bits of a result of the adding step.

Preferably, the predetermined factor is obtained by multiplying a first non-negative integer by 4 and adding 1, and wherein the predetermined increment is obtained by multiplying a first non-negative integer by 2 and adding 1. In this manner, values for the factor and the increment that fulfill the requirements for a maximum-length sequence can readily be obtained from a consecutive set of integers without employing a look-up table for suitable control parameters.

More preferably, the first non-negative integer is a power of 2. In this case, the step of multiplying the preceding integer with the predetermined factor may be implemented with a shift-left operation and an adding operation.

Preferably, the predetermined transformation maps at least one integer of the sequence of integers to an integer that is different from the at least one integer. In this manner, the randomness of the resulting sequence of pseudo-random numbers is improved as compared to the output sequence of the linear congruential generator alone.

Preferably, the predetermined transformation performs a permutation of the bits representing the integer in binary form. Alternatively or additionally, the predetermined transformation may perform an exclusive-or operation between bits representing the integer in binary form. In particular, the predetermined transformation may represent a Gray encoder. Each of these transformations can easily be implemented in hardware or software and leads to a sequence with improved randomness.

Preferably, at least one integer of the sequence of integers is skipped and the pseudo-random sequence of integers is generated by applying the predetermined transformation to the integers of the sequence of integers that are not skipped. More preferably, a value of the integers of the pseudo-random sequence is restricted to the predetermined range of values by skipping integers of the sequence of integers that are mapped to an integer not within the predetermined range of values by the predetermined transformation. Moreover, integers may be skipped that have a least significant bit that equals a predefined value. In this manner, the random properties of the resulting sequence will be improved and/or the number of different sequences that can be generated by changing the control parameter is increased.

The above and other objects and features of the present invention will become more apparent from the following description and preferred embodiments given in conjunction with the accompanying drawings, in which:

Fig. 1A is a schematic drawing illustrating a conventional linear feedback shift register in Fibonacci configuration;

Fig. 1B is a schematic drawing illustrating a conventional linear feedback shift register in Galois configuration;

Fig. 2 is a schematic drawing illustrating a conventional linear feedback shift register with additional wires permutation;

Fig. 3A is a schematic drawing illustrating a conventional linear congruential generator;

Fig. 3B is a schematic drawing illustrating an improved linear congruential generator;

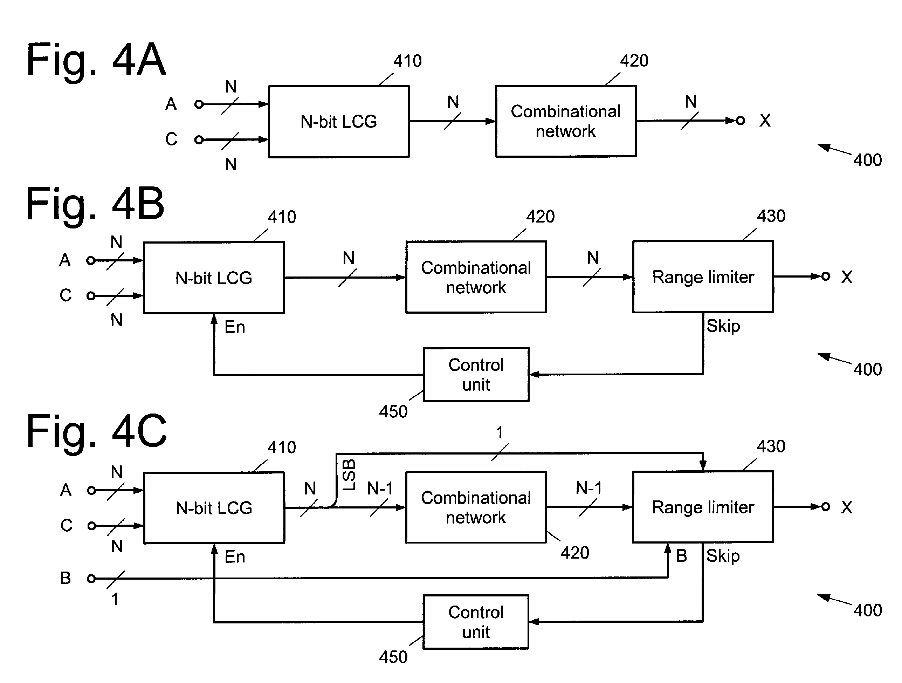

Fig. 4A is a schematic drawing illustrating a pseudo-random sequence generator according to a first embodiment of the present invention;

Fig. 4B is a schematic drawing illustrating a pseudo-random sequence generator according to a second embodiment of the present invention;

Fig. 4C is a schematic drawing illustrating a pseudo-random sequence generator according to a third embodiment of the present invention;

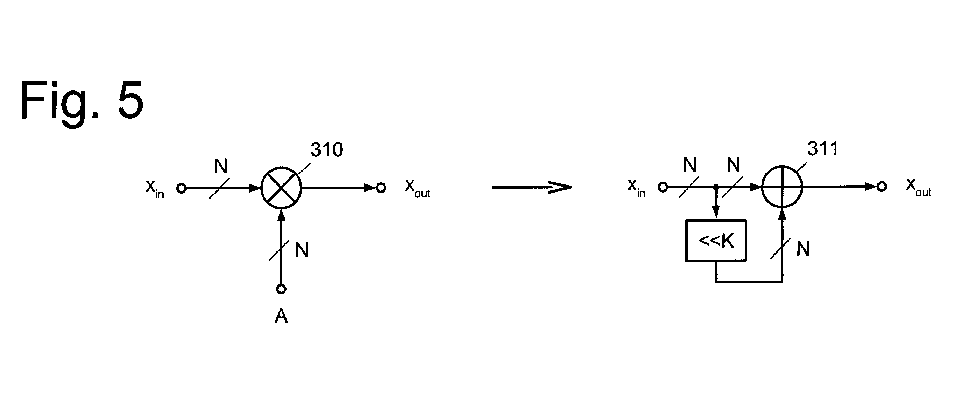

Fig. 5 is a schematic drawing illustrating an aspect of the linear congruential generator according to embodiments of the present invention;

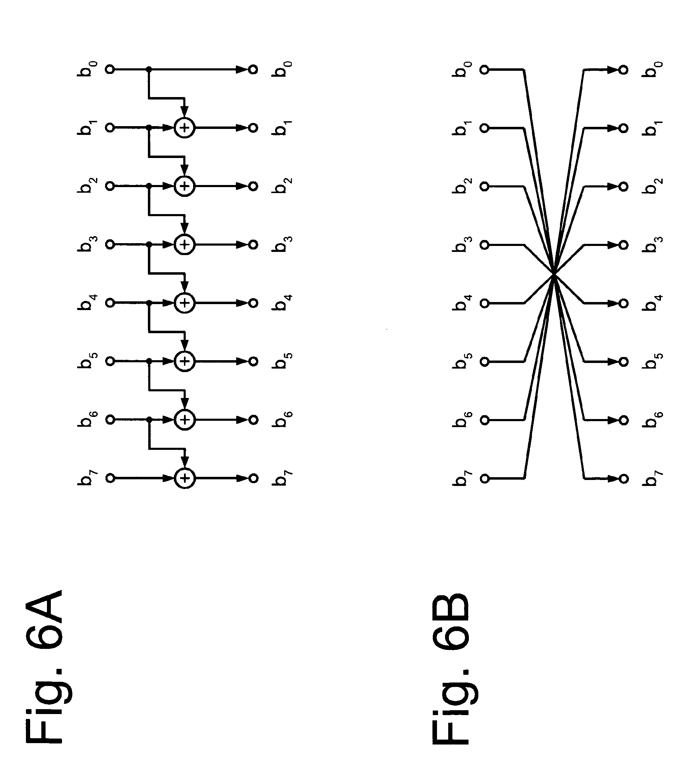

Fig. 6A is a schematic drawing illustrating an embodiment of the combinational network according to embodiments of the present invention;

Fig. 6B is a schematic drawing illustrating an alternative embodiment of the combinational network according to embodiments of the present invention;

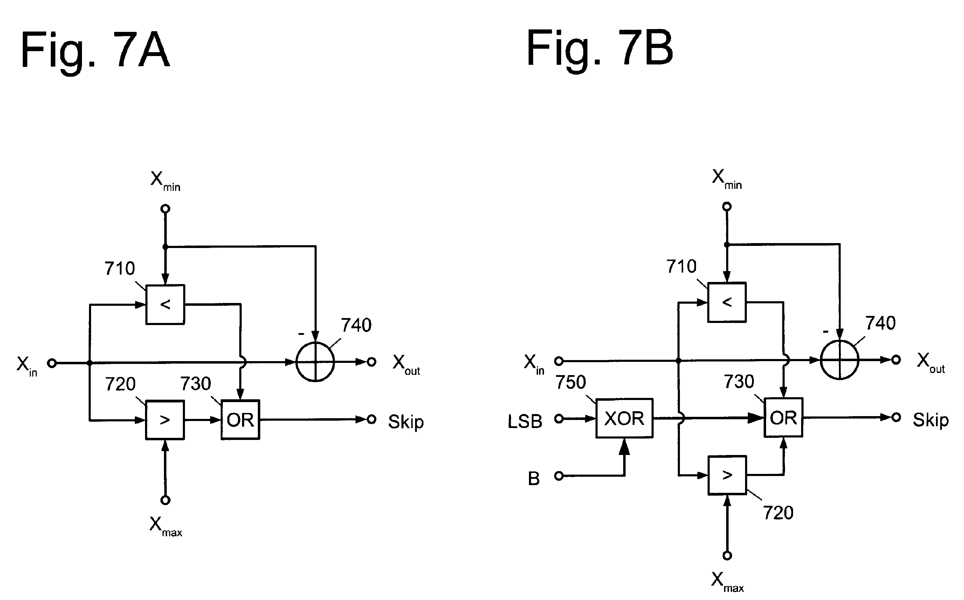

Fig. 7A is a schematic drawing illustrating an embodiment of the range limiter according to embodiments of the present invention;

Fig. 7B is a schematic drawing illustrating another embodiment of the range limiter according to embodiments of the present invention;

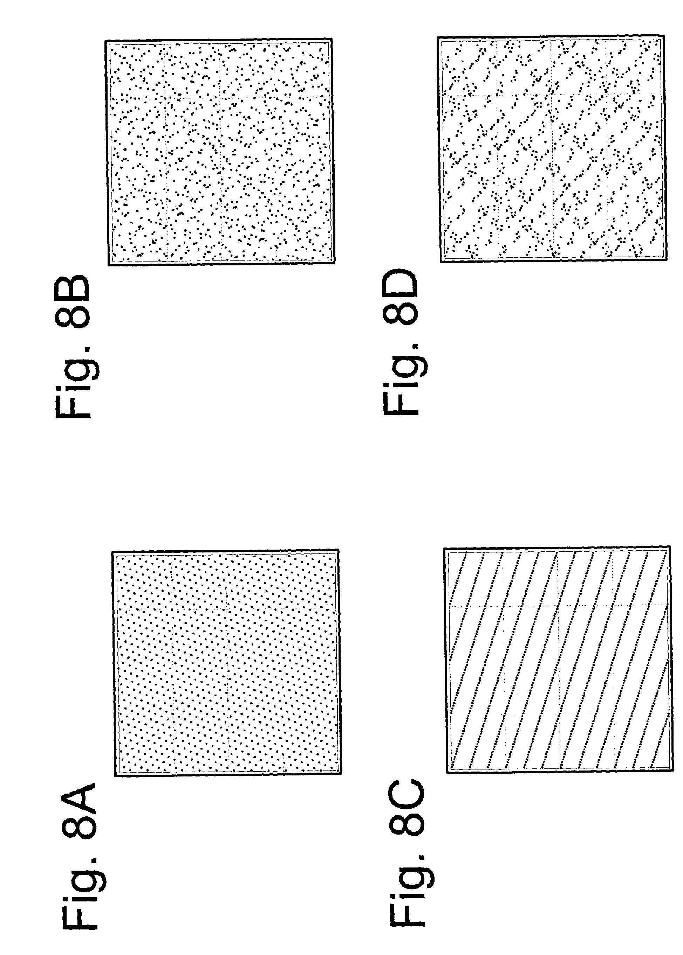

Figs. 8A-D are autocorrelation charts illustrating the randomness of sequences generated by pseudo-random number generators according to the embodiments of the present invention;

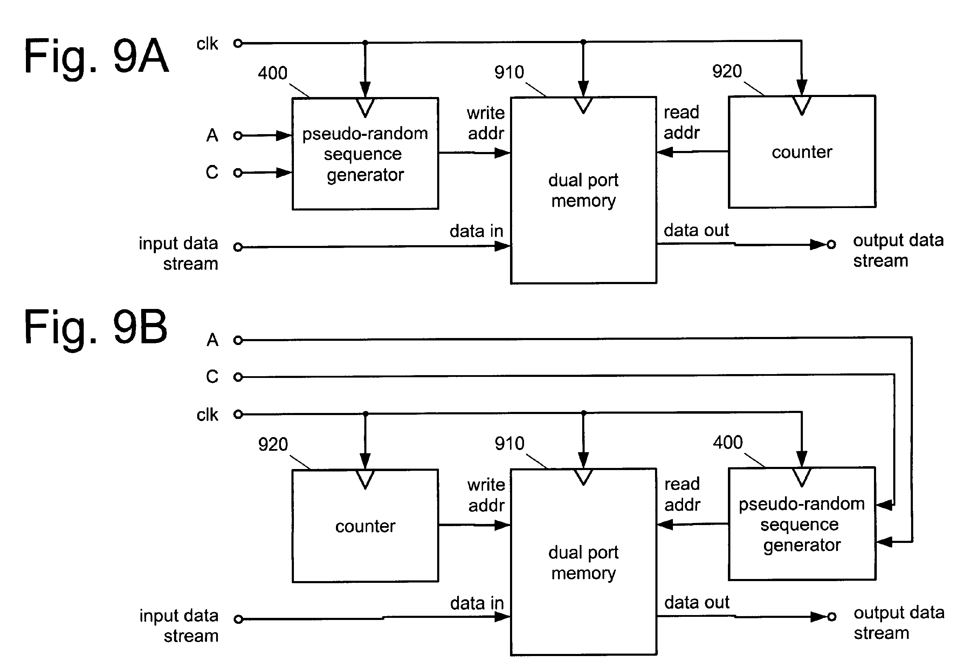

Fig. 9A is a block drawing illustrating an interleaver based on a pseudo-random number generator according to the embodiments of the present invention;

Fig. 9B is a block drawing illustrating a deinterleaver based on a pseudo-random number generator according to the embodiments of the present invention.

DETAILED DESCRIPTION

Figure 4A is a schematic drawing illustrating a pseudo-random sequence generator according to a first embodiment of the present invention.

As shown in Fig. 4A, An N-bit LCG 410 is equipped with input means for receiving values of the multiplier A and the increment C as control parameters. The modulo value M is fixed, preferably to a power of 2, i.e., to $2^N$, which allows for a particularly efficient implementation of the modulo operation; cf. the block diagram of Fig. 3B. The width N must be chosen so that it accommodates all the values from 0 to M-1, i.e. it must be at least ceil(log2(M)). Provided that the control parameters fulfill the above conditions (1) to (3), the LCG generates a periodic maximum-length sequence, i.e., a sequence of integers ranging from 0 to M-1, wherein each integer from this range occurs exactly once. Hence, the sequence consists of M distinct values.

In order to generate multiple different sequences, it is preferable to only change C. For an N-bit LCG, $2^N$-1 sequences can be generated. If this number of sequences is not enough, A can be also made configurable in order to increase the number of combinations.

When A and/or C are configurable, an efficient hardware realization can be obtained by computing them as follows:

$$A = 4*i+1,$$

$$C = 2*j+1,$$

where i and j are integer indices, so that A and C do not exceed $2^N$-1. Thus, i can range from 0 to $2^{N-2}$-1, and j can range from 0 to $2^{N-1}$-1. Hence, there are $2^{N-2}$ possible values for A and $2^{N-1}$ possible values for C. In this manner, control parameters that comply with the requirements for generating a maximum-length sequence can be derived from one or two consecutive set(s) of numbers.

The multiplication with a power-of-2, i.e. 2 and 4 in this case, is just a shift left operation, which requires no explicit multiplication and no look-up table. Therefore, A is of the binary form XXXX01 and C is of the binary form XXXXX1. Thus, computing either A or C requires no extra resources.

When A is fixed (constant), an efficient hardware realization can be obtained if A is chosen so that its binary representation has only a limited number of 1. The multiplication can be replaced by a series of shift and add operations. As A is constant, the shifts are with a constant number of bits and require no resources.

The most convenient case is achieved when there is only one 1 in A, besides the LSB, of course. In that case, A is of the form

$$A = 2K+1,$$

where integer K > 1

In this case, the multiplication is reduced to a simple addition, as shown in Figure 5, wherein a multiplier 310 for multiplying the N-bit signal $X_{in}$ by the N-bit signal A may be replaced by an adder 311 for adding the N-K least significant bits (LSBs) of the input signal (shifted K-times to the left and padding K zeros at the right) to the original input signal.

Still referring to Fig. 4A, the N-bit output of the LCG is then fed into a combinational network 420 in order to increase the randomness of the generated sequence. The combinational network performs a one-to-one mapping on the state space, i.e., maps each N-bit integer to another N-bit integer in a 1:1 fashion. In this manner, the state space is not reduced.

After the one-to-one mapping, the full state space of the counter ($2^N$ states) is preserved. The only difference is that the states will appear in a different order than generated by the LCG, which improves the random properties of the sequence.

The present invention is no restricted in any means with respect to the particular mapping that is realized by the combinational network, as long as the mapping is 1:1 and different from the identity.

A particular example of the combinational network, which offers good results and can easily be implemented, is based on XOR gates (1-bit adders), as shown in Fig. 6A for 8 bits as an example. Such a configuration is known in the literature as a Gray encoder, and is described by the equation: Y = XOR(X,SHL(X)).

Another example of a one-to-one combinational network, which can be implemented even more easily, is a wires permutation, as shown in Fig. 6B. In this example, digital signal lines representing bits of the output of the LCG are permuted so as to provide a 1:1 mapping of the state space. Obviously, the wires permutation is not restricted to the particular example of Fig. 6B. Any permutation of the signal lines (different from the identity) may be employed in order to achieve the advantages of the present invention.

Figure 4B is a schematic drawing illustrating a pseudo-random sequence generator according to a second embodiment of the present invention. According to the second embodiment, the range of numbers contained in the pseudo-random sequence is limited to values smaller than the actual number of states of the LCG.

For instance, numbers in the pseudo-random sequence are restricted to values from 0 to M-1, with M < $2^N$. Such a range limitation also helps to improve the randomness of the generated sequence. The narrower the desired range compared to the full range of $2^N$ states, the better the randomness. The actual improvement in randomness depends on the particular values of A and C.

One solution is to restrict the generated values to an $[X_{min};X_{max}]$ range, where the difference $X_{max}-X_{min}$ = M, $X_{min} \geq 0$, $X_{max} \leq 2^N-1$. If the currently generated value is in that range, it is retained. If not, one or more additional states are generated until a good one is found. Thus, some states of the LCG will be skipped. The number of consecutive states to be skipped is variable, with an average value that depends on the $2^N/M$ ratio.

As shown in Fig. 4B, the pseudo-random sequence generator according to the second embodiment of the present invention differs from the first embodiment by further comprising a range limiter 430 and a control unit 450. Moreover, the LCG is provided with an additional enable input, which allows it to be controlled by the control unit.

The range limiter 430 compares the currently generated value with the boundary values $X_{min}$ and $X_{max}$, and generates a skip signal if the currently generated value does not comply with the set boundary values. The skip signal is evaluated by the control unit in order to control the LCG accordingly.

Fig. 7A is a schematic drawing illustrating an embodiment of the range limiter according to the second embodiment of the present invention.

As shown in Fig. 7A, the range is equipped with two comparators 710, 720 for comparing the currently generated value $X_{in}$ with the two boundary values $X_{min}$ and $X_{max}$, respectively. The output of the two comparators is combined by logical OR (gate 730) in order to generate the skip signal. The subtractor 740 is provided in order to subtract the constant $X_{min}$ from the range-limited generated value so as to obtain a sequence ranging from 0 to M-1. Preferably, $X_{min}$ is set to 0. In this case, one comparator and the subtractor may be economized.

Figure 4C is a schematic drawing illustrating a pseudo-random sequence generator according to a third embodiment of the present invention. According to the third embodiment, the range of the output sequence is limited to half of the number of states of the LCG. Unlike the output range limitation according to the second embodiment, this limitation does not increase the randomness. The advantage of the third embodiment, however, is that it provides twice as many distinct sequences that can be generated by changing the increment C.

The third embodiment exploits the fact that the least significant bit (LSB) of the LCG state has a toggling pattern, i.e. odd and even states are generated alternately. The range can be thus reduced if only the remaining N-1 most significant bits (MSBs) are kept, either for LSB=0 or LSB=1.

As shown in Fig. 4C, the range limiter 430 is adapted for skipping either the odd or the even states of the LCG. To this end, the range limiter receives the LSB of the LCG state and a further control parameter B, indicating whether to skipp the odd or the even states.

Fig. 7B is a schematic drawing illustrating an embodiment of the range limiter according to the third embodiment of the present invention. The range limiter of the third embodiment is similar to that of the second embodiment, except that it additionally receives the control parameter B and the LSB of the LCG state. Both signals are then combined by means of an exclusive-OR gate 750 and fed to the OR-gate 730.

As mentioned above, masking the LSB does not increase the randomness of the generated sequence. The advantage, however, resides in the possibility to double the number of sequences that can be generated by changing the increment C, because for the same M, the LCG can be one bit wider.

The same advantage could also be achieved by simply restricting the output range even more. The disadvantage of doing that is that the maximum number of consecutive values that must be skipped more than doubles. In a hardware implementation, it is desirable to minimize the maximum number of consecutive values that must be skipped, because this would require a correspondingly higher clock rate for a given throughput.

As an example, a sequence containing all values in range [0;850] using a 10-bit LCG with A=5 and starting from state 0 is considered. In this case, using output range limitation, the maximum number of values to skip is 5. On the other hand, if an 11-bit LCG with output range limitation only was used, this number would increase to 15, i.e. it would be more than twice as large. With LSB range limitation enabled, the number is just 10.

Moreover, the number of possible sequences is doubled because of the extra bit B, which selects the mask for the LSB. An additional effect is that the state space is reduced in half, i.e. the generated sequence has half the length. For an N-bit LCG, the length is 2N-1. Considered from the point of view of the sequence length, the number of possible sequences that can be generated by varying C is again doubled, because an LCG is needed that is one bit wider. These two combined effects increase the number of possible sequences four times, if only C is varied.

The randomness of the generated sequence is best characterized through its auto-correlation function. A very effective method for analyzing the auto-correlation is to plot the generated sequence against a delayed copy of itself. The delay in samples is referred to as the auto-correlation lag. The resulting points are confined to a square. The more evenly the points are spread over the square, the better the auto-correlation. Some combinations of A and C parameters are better than other.

Figs. 8A to 8D illustrate the auto-correlation at lag 1 for an exemplary 10-bit LCG with and without the inventive combinational network. Note that the auto-correlation depends on A, but not on C.

Fig. 8A is a chart computed for A = 81 and exhibits a rather good distribution of the generated numbers, even without combinational network. Nevertheless, the inventive combinational network (Gray encoding in the example) further improves the randomness, as it is apparent from Fig. 8B.

Fig. 8C is a similar chart as Fig. 8A, but for A = 85, which does not exhibit a good distribution since the points are concentrated on a few lines. Still, the combinational network destroys the regularity of the lattice, thus improving the randomness, as it is apparent from Fig. 8D.

Hence, the pseudo-random sequence generator of the present invention is capable of generating sequences of pseudo random numbers with a good degree of randomness, even if the control parameters for the LCG are not optimal. Therefore, a plurality of different sequences can be generated without selecting a few "good" control parameters before hand.

The main application of a pseudo-random generator of the present invention is the realization of pseudo-random block interleavers and the associated deinterleavers.

A block interleaver processes a data stream by interleaving the data words on a block-by-block basis. For each block of data, the words are written to a memory in increasing order and read out in a different/permuted order. Alternatively, the interleaving process can be carried out by reading the memory in increasing order and writing it in permuted order. There is no essential difference between an interleaver and a deinterleaver. The deinterleaving process is performed by simply swapping the read and the write addresses.

If we denote the permutation by H(i), the following two interleaving/deinterleaving combinations are possible.

a) Interleaving: y(i) = x(H(i)), deinterleaving: y(H(i)) = x(i)

b) Interleaving: y(H(i)) = x(i), deinterleaving: y(i) = x(H(i))

In the case of a pseudo-random interleaver, the H(i) permutation is generated by a pseudo-random sequence generator such as that of the present invention.

Fig. 9A is a block drawing illustrating an interleaver based on a pseudo-random number generator according to the embodiments of the present invention. The central component of the interleaver is a dual port memory unit 910 that allows for a simultaneously writing of data at a first address (input addr) and reading of data from a second address (output addr). The write addresses are generated by the inventive pseudo-random sequence generator 400, whereas read addresses are generated in sequence by means of a counter 920. The sequence generator 400, the memory unit 910, and the counter are clocked by an external clock signal (clk). The manner in which the data words of one block are shuffled is determined by the precise sequence of integers generated by the sequence generator 400, which in turn is controlled by providing control parameters A and C, as described above.

Fig. 9B is a block drawing illustrating a deinterleaver based on a pseudo-random number generator according to the embodiments of the present invention.

The deinterleaver is basically equivalent to the deinterleaver, except that the role of the pseudo-random sequence generator and the counter are exchanged.

For practical purposes, the interleaving scheme, i.e., the sequence in which the data words are shuffled, is changed for each block of data by changing the control parameters of the pseudo-random sequence generator accordingly. Preferably, a predefined (periodic) sequence of control parameter values is employed for this purpose.

To summarize, the present invention relates to a method for generating pseudo-random sequences of integers and a corresponding apparatus. Specifically, it is the aim of the present invention to provide a pseudo-random sequence generator that can easily be configured to generate one of a plurality of different sequences, wherein each sequence includes every integer from a certain finite set exactly once and exhibits a high degree of randomness. To this end, the output of a linear congruential generator is passed through a combinational network that performs a one-to-one mapping of the state space in order to improve the degree of randomness. The present invention also relates to a method for interleaving/ deinterleaving a stream of data and a corresponding apparatus, based on such a pseudo-random sequence generator.

## Claims

1. A pseudo-random sequence generator for generating a pseudo-random sequence of integers, wherein each integer within a predetermined range occurs exactly once within the pseudo-random sequence, the pseudo-random sequence generator comprising:

a linear congruential generator (410) for generating a sequence of integers; and
a combinational network (420) for applying a predetermined transformation to each integer of the sequence of integers, wherein the predetermined transformation maps each integer of the sequence of integers to an integer within the predetermined range in a one-to-one fashion.

2. A pseudo-random sequence generator according to claim 1, further comprising
a means for receiving at least one control parameter, wherein the linear congruential generator (410) is adapted for generating the sequence of integers in accordance with said at least one control parameter.

3. A pseudo-random sequence generator according to claim 2,
wherein the at least one control parameter comprises at least one of a predetermined factor, a predetermined increment, and a predetermined divisor;

and

wherein the linear congruential generator (410) is adapted for recursively computing each integer of the sequence of integers from a preceding integer by multiplying the preceding integer with the predetermined factor, adding the predetermined increment and computing the remainder of a division by the predetermined divisor.

4. A pseudo-random sequence generator according to claim 3, wherein the predetermined increment and the predetermined divisor are relatively prime, the predetermined factor minus 1 is divisible by all prime factors of the predetermined divisor, and the predetermined factor minus 1 is a multiple of 4 if the predetermined divisor is a multiple of 4.

5. A pseudo-random sequence generator according to claim 4, wherein the predetermined divisor is a power of two.

6. A pseudo-random sequence generator according to claim 5, wherein the linear congruential generator (410) is adapted for computing the remainder of the division by the predetermined divisor by truncating bits of a result of the addition.

7. A pseudo-random sequence generator according to any of claims 3 to 6, wherein the predetermined factor is obtained by multiplying a first non-negative integer by 4 and adding 1, and wherein the predetermined increment is obtained by multiplying a first non-negative integer by 2 and adding 1.

8. A pseudo-random sequence generator according to claim 7, wherein the first non-negative integer is a power of 2.

9. A pseudo-random sequence generator according to any of claims 1 to 8, wherein the combinational network (420) is adapted for mapping at least one integer of the sequence of integers to an integer that is different from the at least one integer.

10. A pseudo-random sequence generator according to any of claims 1 to 9, wherein the combinational network (420) comprises a wires permutation adapted for permuting of the bits representing the integer in binary form.

11. A pseudo-random sequence generator according to any of claims 1 to 10, wherein the combinational network (420) performs an exclusive-or operation between bits representing the integer in binary form.

12. A pseudo-random sequence generator according to any of claims 1 to 11, wherein the combinational network (420) comprises a Gray encoder.

13. A pseudo-random sequence generator according to any of claims 1 to 12, further comprising a control unit (450) for skipping at least one integer of the sequence of integers, and wherein the pseudo-random sequence of integers is generated by feeding the integers of the sequence of integers that are not skipped to the combination network.

14. A pseudo-random sequence generator according to claim 13, further comprising a range limiter (430) for restricting a value of the integers of the pseudo-random sequence to the predetermined range of values by instructing the control section to skip integers of the sequence of integers that are mapped to an integer not within the predetermined range of values by the combinational network (420).

15. A pseudo-random sequence generator according to claim 13 or 14, wherein the control unit is adapted for skipping integers having a least significant bit that equals a predefined value.

16. An interleaver/deinterleaver for interleaving and deinterleaving a block of data words, the apparatus comprising:

a pseudo-random sequence generator (400) according to any of claims 1 to 15;
a memory unit (810);
a write control means for writing the block of data words to the memory unit in a first order; and
a read control means reading the block of data words from the memory unit in a second order,

wherein a relation between the first order and the second order is given by a permutation indicated by a pseudo-random sequence of integers generated by the pseudo-random sequence generator.

17. An interleaver/deinterleaver for interleaving and deinterleaving a stream of data words, the apparatus comprising:

a control unit for dividing the stream of data words into blocks of a predetermined number of data words;
an interleaver/deinterleaver according to claim 16 for interleaving/deinterleaving each block of data words; and

wherein the control unit is further adapted for changing the at least one control parameter of the interleaver/deinterleaver in accordance with a predefined sequence of control parameter values.

18. An interleaver/deinterleaver according to claim 17, wherein the predefined sequence of control parameter values comprises at least two distinct control parameter values, wherein said at least two distinct control parameter values correspond to at least two distinct pseudo-random sequences of integers, respectively.

19. An interleaver/deinterleaver according to claim 17 or 18, wherein the predefined sequence of control parameter values is a periodic sequence of at least two distinct control parameter values.

20. A method for generating a pseudo-random sequence of integers, wherein each integer within a predetermined range occurs exactly once within the pseudo-random sequence, said method comprising the steps of
generating a sequence of integers; and
applying a predetermined transformation to each integer of the sequence of integers, wherein the predetermined transformation maps each integer of the sequence of integers to an integer within the predetermined range in a one-to-one fashion.

21. A method according to claim 20, further comprising the step of
receiving at least one control parameter,
wherein the sequence of integers is generated in accordance with said at least one control parameter.

22. A method according to claim 21,
wherein the at least one control parameter comprises at least one of a predetermined factor, a predetermined increment, and a predetermined divisor; and
wherein each integer of the sequence of integers is computed recursively from a preceding integer by multiplying the preceding integer with the predetermined factor, adding the predetermined increment and computing the remainder of a division by the predetermined divisor.

23. A method according to claim 22, wherein the predetermined increment and the predetermined divisor are relatively prime, the predetermined factor minus 1 is divisible by all prime factors of the predetermined divisor, and the predetermined factor minus 1 is a multiple of 4 if the predetermined divisor is a multiple of 4.

24. A method according to claim 23, wherein the predetermined divisor is a power of two.

25. A method according to claim 24, wherein the remainder of the division by the predetermined divisor is computed by truncating bits of a result of the adding step.

26. A method according to any of claims 22 to 25, wherein the predetermined factor is obtained by multiplying a first non-negative integer by 4 and adding 1, and wherein the predetermined increment is obtained by multiplying a first non-negative integer by 2 and adding 1.

27. A method according to claim 26, wherein the first non-negative integer is a power of 2.

28. A method according to any of claims 20 to 27, wherein the predetermined transformation maps at least one integer of the sequence of integers to an integer that is different from the at least one integer.

29. A method according to any of claims 20 to 28, wherein the predetermined transformation performs a permutation of the bits representing the integer in binary form.

30. A method according to any of claims 20 to 29, wherein the predetermined transformation performs an exclusive-or operation between bits representing the integer in binary form.

31. A method according to any of claims 20 to 30, wherein the predetermined transformation is a Gray encoder.

32. A method according to any of claims 20 to 31, further comprising the step of skipping at least one integer of the sequence of integers, and wherein the pseudo-random sequence of integers is generated by applying the predetermined transformation to the integers of the sequence of integers that are not skipped.

33. A method according to claim 32, wherein a value of the integers of the pseudo-random sequence is restricted to the predetermined range of values by skipping integers of the sequence of integers that are mapped to an integer not within the predetermined range of values by the predetermined transformation.

34. A method according to claim 32 or 33, wherein the skipping step comprises skipping integers having a least significant bit that equals a predefined value.

35. A method for interleaving and deinterleaving a block of data words, the method comprising the steps of:

writing the block of data words to a memory in a first order; and
reading the block of data words from the memory in a second order,

wherein a relation between the first order and the second order is given by a permutation indicated by a pseudo-random sequence of integers generated by a method according to any of claims 20 to 34.

**36.** A method for interleaving and deinterleaving a stream of data words, the method comprising the steps of:

dividing the stream of data words into blocks of a predetermined number of data words; interleaving/deinterleaving each block of data words by the method of claim 35; and changing the at least one control parameter in accordance with a predefined sequence of control parameter values.

**37.** A method according to claim 36, wherein the predefined sequence of control parameter values comprises at least two distinct control parameter values, wherein said at least two distinct control parameter values correspond to at least two distinct pseudo-random sequences of integers, respectively.

**38.** A method according to claim 36 or 37, wherein the predefined sequence of control parameter values is a periodic sequence of at least two distinct control parameter values.

**39.** A computer program product comprising a computer readable medium having computer readable program code embodied thereon, the program code being adapted to carry out all steps of any of claims 20 to 38.

# Fig. 1A

$x^8$    110   111   112   113   114   115   116   117

$x^4$   $x^3$   $x^2$   $x^0=1$

124   123   122

100

# Fig. 1B

110   111   122   112   123   113   124   114   115   116   117

$x^0=1$   $x^2$   $x^3$   $x^4$   $x^8$

100

EP 2 101 257 A1

Fig. 2

# Fig. 3A

# Fig. 3B

# Fig. 4A

A ○——$N$——→ [ N-bit LCG 410 ] ——$N$——→ [ Combinational network 420 ] ——$N$——→ ○ X

C ○——$N$——→

→ 400

# Fig. 4B

A ○——$N$——→ [ N-bit LCG 410 ] ——$N$——→ [ Combinational network 420 ] ——$N$——→ [ Range limiter 430 ] ——→ ○ X

C ○——$N$——→

En ↑                                                                              Skip ↓

[ Control unit 450 ]

→ 400

# Fig. 4C

A ○——$N$——→ [ N-bit LCG 410 ] ——$N$—→ LSB $N-1$—→ [ Combinational network 420 ] ——$N-1$——→ [ Range limiter 430 ] ——→ ○ X

C ○——$N$——→                              $1$ ——————————————————————————→

B ○——$1$——→ En ↑                                                      B ↑ Skip ↓

[ Control unit 450 ]

→ 400

EP 2 101 257 A1

EP 2 101 257 A1

# Fig. 5

Fig. 6A

Fig. 6B

# Fig. 7A

# Fig. 7B

EP 2 101 257 A1

# Fig. 8A

# Fig. 8B

# Fig. 8C

# Fig. 8D

EP 2 101 257 A1

# Fig. 9A

# Fig. 9B

EP 2 101 257 A1

## EUROPEAN SEARCH REPORT

Application Number

EP 08 00 4740

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CLARK G C ET AL: "ERROR-CORRECTION CODING FOR DIGITAL COMMUNICATIONS" R CORRECTION CODING FOR DIGITAL COMMUNICATIONS, NEW YORK, PLENUM PRESS, US, 1 January 1981 (1981-01-01), pages 349-352, XP002131001 | 1-10, 16-29, 35-39 | INV. G06F7/58 H03M13/27 ADD. G06F7/76 |
| Y | * page 349, paragraph 8.3.2 - page 352 * <br><br> * abstract * <br> * figures 8-11 * | 11,12, 30,31 | |
| Y | EP 0 913 829 A (ST MICROELECTRONICS SRL [IT]) 6 May 1999 (1999-05-06) * abstract * * page 2, paragraph 17 - page 3, paragraph 23 * | 11,12, 30,31 | |
| A | US 2003/107942 A1 (PERNER MARTIN [DE]) 12 June 2003 (2003-06-12) * abstract * * page 3, paragraph 24 - page 5, paragraph 29 * * figures 3,4 * | 10,29 | |
| X | EP 1 092 270 A (SAMSUNG ELECTRONICS CO LTD [KR]) 18 April 2001 (2001-04-18) * abstract * * figures 1,2 * | 1,16,20 | TECHNICAL FIELDS SEARCHED (IPC) G06F H03M G11C |
| A | EP 0 901 069 A (NIPPON ELECTRIC CO [JP]) 10 March 1999 (1999-03-10) <br><br> * abstract * * figure 2 * | 1-12, 16-31, 35-39 | |

~~The present search report has been drawn up for all claims~~

| Place of search | Date of completion of the search | Examiner |
|---|---|---|
| The Hague | 25 July 2008 | Post, Katharina |

Europäisches
Patentamt

European
Patent Office

Office européen
des brevets

**Application Number**

EP 08 00 4740

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 16-28, 35-39

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 00 4740

---

The Search Division considers that the present European patentapplication does not comply with the requirements of unity of invention and relates to severalinventions or groups of inventions, namely:

1. claims: 1-9,16-28,35-39

    the above pseudo-random sequence generator, in which the factor parameter is chosen as specified in claims 8 and 27, namely of the form A = 4*2k+1 and corresponding method

1.1. claims: 10-12,29-31

    the above pseudo-random sequence generator with the combinational network comprising a Gray encoder and corresponding method
    ---

2. claims: 13-15,32-34

    the above pseudo-random sequence generator, which further comprises a control unit for limiting the range of integers fed into the combinational network and corresponding method
    ---

Please note that all inventions mentioned under item 1, although not necessarily linked by a common inventive concept, could be searched without effort justifying an additional fee.

**EP 2 101 257 A1**

## ANNEX TO THE EUROPEAN SEARCH REPORT
## ON EUROPEAN PATENT APPLICATION NO.

EP 08 00 4740

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2008

| Patent document cited in search report | | Publication date | Patent family member(s) | | Publication date |
|---|---|---|---|---|---|
| EP 0913829 | A | 06-05-1999 | NONE | | |
| US 2003107942 | A1 | 12-06-2003 | DE | 10161042 A1 | 03-07-2003 |
| EP 1092270 | A | 18-04-2001 | AU | 746913 B2 | 02-05-2002 |
| | | | AU | 3681700 A | 23-10-2000 |
| | | | BR | 0005569 A | 06-03-2001 |
| | | | CA | 2332990 A1 | 12-10-2000 |
| | | | CN | 1297616 A | 30-05-2001 |
| | | | DE | 60015272 D1 | 02-12-2004 |
| | | | DE | 60015272 T2 | 21-04-2005 |
| | | | JP | 3447270 B2 | 16-09-2003 |
| | | | JP | 2002541711 T | 03-12-2002 |
| | | | WO | 0060751 A1 | 12-10-2000 |
| | | | KR | 20000066035 A | 15-11-2000 |
| | | | RU | 2186460 C1 | 27-07-2002 |
| | | | US | 6590951 B1 | 08-07-2003 |
| EP 0901069 | A | 10-03-1999 | AU | 7882498 A | 18-02-1999 |
| | | | CA | 2244631 A1 | 07-02-1999 |
| | | | JP | 11053173 A | 26-02-1999 |
| | | | US | 6097815 A | 01-08-2000 |

EPO FORM P0459

For more details about this annex : see Official Journal of the European Patent Office, No. 12/82

23